# EUROPEAN PATENT APPLICATION

(11) **EP 4 209 764 A1**
(43) Date of publication of application: **12.07.2023**
(21) Application number: 21864441.7
(22) Date of filing: 03.09.2021
(51) Int. Cl.: G01L 9/04

(54) **PRESSURE SENSOR**

(30) Priority: 03.09.2020 JP 2020148366
(71) Applicant: TDK Corporation, Tokyo 103-6128 (JP)
(72) Inventor: SASAHARA, Tetsuya, Tokyo 103-6128 (JP); UNNO, Ken, Tokyo 103-6128 (JP); KOBAYASHI, Masanori, Tokyo 103-6128 (JP); NAWAOKA, Kohei, Tokyo 103-6128 (JP)
(74) Representative: Epping - Hermann - Fischer
(86) International application number: PCT/JP2021/032502
(87) International publication number: WO 2022/050389

(57) **Abstract**

[Problem] To provide a pressure sensor which reduces the influence that temperature distribution on a membrane has on pressure detection values. [Solution] Provided is a pressure sensor including: a membrane in which distortion corresponding to pressure occurs; at least two first resistors disposed apart from each other on a first circumference of said membrane, on which positive distortion characteristics are observed when pressure is applied; and at least two second resistors disposed apart from each other on a second circumference of said membrane, on which negative distortion characteristics are observed when pressure is applied. A Wheatstone bridge that includes the at least two first resistors and the at least two second resistors is formed; and at least either the number of first resistors disposed on the first circumference or the number of second resistors disposed on the second circumference is three or more.

## Description

### Technical Field

The present invention relates to a pressure sensor that detects a strain due to a deformation of a membrane by resistance change.

### Background

A pressure sensor is known that detects a strain of a membrane (also referred to as a diaphragm) by resistance change using a piezoresistive effect. In such a pressure sensor, for example, a membrane, which elastically deforms under pressure, is formed in a part of a pressure-receiving member referred to as a stem, and the strain due to the deformation of the membrane is detected by a resistance change of a resistor provided on the membrane.

Resistors constituting the sides of a Wheatstone bridge are arranged on the membrane, and the resistance values of the resistors change not only with the change in the membrane due to pressure, but also with the temperature of the resistors. In a conventional pressure sensor, a temperature measurement sensor is disposed on the membrane, and the output of a Wheatstone bridge is corrected according to the output value of the temperature sensor (see Patent Document 1).

In the case of the conventional technique of correction with the output value of the temperature sensor, however, since the temperature sensor is disposed at a position different from that of the resistor, there is a problem that an error is generated between the detected value of the temperature sensor and the temperature of the resistor. For example, since the temperature of the membrane is not constantly uniform, if the temperature differs depending upon the position on the membrane, the conventional technique has the problem of increasing the error in the detected pressure value.

### Prior Arts

### Patent Document

Patent Document 1: JP2018048859 (A)
Patent Document 1: JPH1070286 (A)

### Summary of Invention

### Problems to be solved by Invention

The present invention has been achieved under such circumstances and provides a pressure sensor that reduces the influence of a temperature distribution on a membrane against a pressure detection value.

### Means for solving the Problem

To achieve the above object, a pressure sensor according to the present invention comprises:
a membrane generating a strain in response to pressure;
at least two first resistors arranged separately from each other on a first circumference where a positive strain characteristic is generated at the time of applying pressure on the membrane; and
at least two second resistors arranged separately from each other on a second circumference where a negative strain characteristic is generated at the time of applying pressure on the membrane,
wherein
the at least two first resistors and the at least two second resistors constitute a Wheatstone bridge, and
at least one of the number of first resistors arranged on the first circumference and the number of second resistors arranged on the second circumference is three or more.

Although two first resistors and two second resistors are originally sufficient to form a Wheatstone bridge, the pressure sensor according to the present invention includes at least one extra first resistor or second resistor, and the respective resistors are arranged separately from each other on the membrane. As a result, even if one first resistor or second resistor is disposed at a portion having the temperature different from that at other portions on the membrane, it is possible to effectively reduce or remove the influence of this resistor against the output value of the pressure sensor.

Moreover, for example, the number of first resistors constituting the Wheatstone bridge may be three or more, and a first side, one of four sides on which the first resistors or the second resistors are arranged in the Wheatstone bridge, may comprise two or more first resistors.

When the number of first resistors is three or more and the first side of the Wheatstone bridge is formed by two first resistors, it is possible to reduce the influence of a temperature distribution generated on the first circumference against the output value of the pressure sensor.

Moreover, for example, a distance between one of the first resistors constituting the first side and another one of the first resistors constituting the first side may be equal to or more than a distance between one of the first resistors constituting the first side and at least one of the first resistors constituting a second side different from the first side in the Wheatstone bridge.

When the first side is formed by two first resistors, a combined resistance value of the first side is more likely to reflect a standard temperature of the membrane by increasing the distance between the two first resistors. Thus, such a pressure sensor can effectively reduce the influence of the temperature distribution generated on the first circumference against the output value of the pressure sensor.

Moreover, for example, one of the first resistors constituting the first side may be connected in series to another one of the first resistors constituting the first side.

When the first side is formed by two first resistors connected in series, the resistance values of the respective first resistors can be reduced, and these first resistors are thus advantageous for miniaturization.

Moreover, for example, one of the first resistors constituting the first side may be connected in parallel to another one of the first resistors constituting the first side.

When the first side is formed by two first resistors connected in parallel, even if an unexpected temperature change or damage is generated in one of the first resistors, the function of the Wheatstone bridge can be maintained, which is advantageous for redundancy.

Moreover, for example, the number of second resistors constituting the Wheatstone bridge may be three or more, and a third side, one of four sides on which the first resistors or the second resistors are arranged in the Wheatstone bridge, may comprise two or more second resistors.

When the number of second resistors is three or more and the third side of the Wheatstone bridge is formed by two second resistors, it is possible to reduce the influence of a temperature distribution generated on the second circumference against the output value of the pressure sensor.

Moreover, for example, a distance between one of the second resistors constituting the third side and another one of the second resistors constituting the third side may be equal to or more than a distance between one of the second resistors constituting the third side and at least one of the second resistors constituting a fourth side different from the third side in the Wheatstone bridge.

When the third side is formed by two second resistors, a combined resistance value of the third side is more likely to reflect the standard temperature of the membrane by increasing the distance between the two second resistors. Thus, such a pressure sensor can effectively reduce the influence of the temperature distribution generated on the second circumference against the output value of the pressure sensor.

Moreover, for example, one of the second resistors constituting the third side may be connected in series to another one of the second resistors constituting the third side.

When the third side is formed by two second resistors connected in series, the resistance values of the respective second resistors can be reduced, and these second resistors are thus advantageous for miniaturization.

Moreover, for example, one of the second resistors constituting the third side may be connected in parallel to another one of the second resistors constituting the third side.

When the third side is formed by two second resistors connected in parallel, even if an unexpected temperature change or damage is generated in one of the second resistors, the function of the Wheatstone bridge can be maintained, which is advantageous for redundancy.

Moreover, for example, the pressure sensor according to the present invention may further comprise at least a pair of connection units electrically connected to one end and the other end of at least one of the first resistors and the second resistors,
wherein the connection units may be capable of changing connection between a state in which at least one of the first resistors and the second resistors constitute the Wheatstone bridge and a state in which at least one of the first resistors and the second resistors do not constitute the Wheatstone bridge.

In such a pressure sensor, the first resistors or the second resistors arranged at positions where a temperature distribution is generated on the membrane can be excluded from the resistors constituting the Wheatstone bridge at the stage of wiring the pressure sensor to a substrate portion, at the stage of assembling the pressure sensor to a measurement target, or the like. Such a pressure sensor can reduce or remove the influence of the temperature distribution generated on the membrane against the output value of the pressure sensor.

Moreover, for example, the pressure sensor according to the present invention may comprise a control unit for controlling a connection change of the connection units.

In such a pressure sensor, the first resistors or the second resistors arranged at positions where a temperature distribution is generated on the membrane can be excluded from the resistors constituting the Wheatstone bridge while obtaining an actual detection value during inspection or use of the pressure sensor. As a result, it is possible to effectively reduce or remove the influence of the temperature distribution generated on the membrane against the output value of the pressure sensor.

Moreover, for example, all of the first resistors arranged on the first circumference may be arranged at substantially equal intervals, and all of the second resistors arranged on the second circumference may be arranged at substantially equal intervals.

In such a pressure sensor, each side of the Wheatstone bridge is more likely to include the resistors having a standard temperature distribution on the membrane, and it is possible to effectively reduce the influence of the temperature distribution on the membrane against the output value of the pressure sensor.

### Brief Description of the Drawings

FIG. 1 is a schematic cross-sectional view of a pressure sensor according to First Embodiment of the present invention;
FIG. 2 is a conceptual diagram illustrating an arrangement of resistors in the pressure sensor according to First Embodiment;
FIG. 3 is a conceptual diagram illustrating an example of a temperature distribution generated in the pressure sensor according to First Embodiment;
FIG. 4 is a conceptual diagram illustrating a configuration example of a Wheatstone bridge formed by the pressure sensor according to First Embodiment;
FIG. 5 is a conceptual diagram illustrating an arrangement of resistors in a pressure sensor according to Second Embodiment;
FIG. 6 is a conceptual diagram illustrating an example of a temperature distribution generated in the pressure sensor according to Second Embodiment;
FIG. 7 is a conceptual diagram illustrating a configuration example of a Wheatstone bridge formed by the pressure sensor according to Second Embodiment;
FIG. 8 is a conceptual diagram illustrating an arrangement of resistors in a pressure sensor according to Third Embodiment;
FIG. 9 is a conceptual diagram illustrating a configuration example of a Wheatstone bridge formed by the pressure sensor according to Third Embodiment;
FIG. 10 is a conceptual diagram illustrating an example of the shape of wiring in the pressure sensor according to Third Embodiment;
FIG. 11 is a conceptual diagram illustrating an example of a temperature distribution generated in the pressure sensor according to Third Embodiment;
FIG. 12 is a conceptual diagram illustrating a configuration example of a Wheatstone bridge formed by a pressure sensor according to Fourth Embodiment;
FIG. 13 is a conceptual diagram illustrating a pressure sensor according to Fifth Embodiment;
FIG. 14 is a conceptual diagram illustrating a pressure sensor according to Sixth Embodiment;
FIG. 15 is a conceptual diagram illustrating an example of a control method by a control unit shown in FIG. 14; and
FIG. 16 is a conceptual diagram for describing control modes performed by the control unit shown in FIG. 14.

### Detailed Description of Invention

Hereinafter, the present invention is described based on embodiments shown in the figures.

### First Embodiment

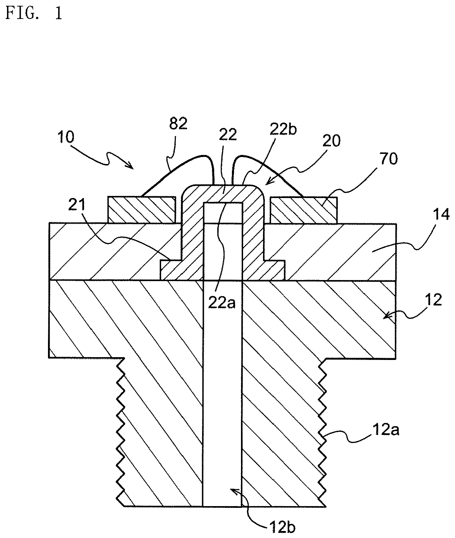

FIG. 1 is a schematic cross-sectional view of a pressure sensor 10 according to the present invention. The pressure sensor 10 includes a stem 20 having a membrane 22, a connection member 12 with a flow path 12b for transmitting pressure to the stem 20, a holding member 14 for fixing the stem 20 to the connection member 12, a substrate portion 70 wired to an electrode portion or the like on the membrane 22, and the like.

As shown in FIG. 1, a screw groove 12a for fixing the pressure sensor 10 to a measurement target is formed on the outer circumference of the connection member 12. The flow path 12b formed inside the connection member 12 tightly communicates with a pressure chamber as a measurement target by fixing the pressure sensor 10 via the screw groove 12a.

As shown in FIG. 1, the stem 20 has a bottomed (upper bottom) cylindrical outer shape and is provided at one end of the flow path 12b in the connection member 12. The stem 20 is provided with a flange portion 21 on the opening side and is fixed to the connection member 12 by sandwiching the flange portion 21 between the holding member 14 and the connection member 12. The opening of the stem 20 and the flow path 12b of the connection member 12 are tightly connected using the holding member 14, and the pressure as a measurement target is transmitted to the membrane 22 of the stem 20.

The membrane 22 is provided on the upper bottom of the stem 20. The membrane 22 is thinner than other parts of the stem 20, such as a side wall, and is deformed according to the pressure transmitted from the flow path 12b. The membrane 22 has an inner surface 22a that comes into contact with the pressure fluid and an outer surface 22b that is opposite to the inner surface 22a. Resistors, electrode portions, and the like mentioned below are provided on the outer surface 22b side of the membrane 22.

The substrate portion 70 is fixed to the holding member 14. The substrate portion 70 includes wirings, circuits, and the like electrically connected to resistors and electrode portions formed on the outer surface 22b of the membrane 22. The substrate portion 70 and the electrode portion and the resistors on the membrane 22 are electrically connected via a connection wiring 82 or the like formed by wire bonding or the like. The substrate portion 70 has a ring outer shape, and the stem 20 inserts a through hole formed at the center of the substrate portion 70.

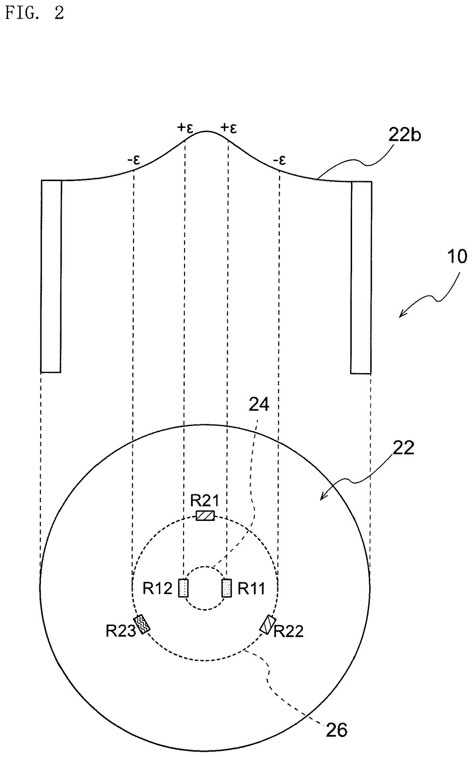

FIG. 2 is a conceptual diagram illustrating an arrangement state of resistors on the outer surface 22b of the membrane 22. The upper part of FIG. 2 is a schematic cross-sectional view of the stem 20, and the lower part of FIG. 2 is a schematic plane view of the stem 20 viewed from the upper side, which is the outer surface 22b side of the membrane 22.

As shown in the lower part of FIG. 2, two first resistors R11 and R12 and three second resistors R21, R22, and R23 are arranged on the outer surface 22b of the membrane 22. As shown in FIG. 2, the first resistors R11 and R12 are arranged separately from each other on a first circumference 24 where a positive strain characteristic ε+ is generated at the time of applying pressure on the membrane 22. At least two first resistors R11 and R12 are arranged on the first circumference 24. As shown in other embodiments, the pressure sensor according to the present invention may include three, four, or five or more first resistors R11 and R12.

The two first resistors R11 and R12 are arranged along the first circumference 24 at a pitch of 180°. Preferably, all of the first resistors R11 and R12 arranged on the first circumference 24 are arranged at substantially equal intervals. Note that, preferably, the first circumference 24 is a line connecting positions where substantially the same strains are generated at the time of applying pressure on the membrane 22. When the first resistors R11 and R12 are arranged on such a first circumference 24, the linearity between the pressure and the output of the Wheatstone bridge is improved. The first circumference 24 preferably passes through a position where a maximum positive strain is generated at the time of applying pressure on the membrane 22, but may pass through another position where a positive strain is generated. Moreover, as shown in FIG. 2, the first resistors R11 and R12 are preferably arranged so that their center positions are on the first circumference 24, but the arrangement of the first resistors R11 and R12 is not limited to this, and the first resistors R11 and R12 are at least partly arranged on the first circumference 24.

The second resistors R21, R22, and R23 are arranged separately from each other on a second circumference 26 where a negative strain characteristic ε- is generated at the time of applying pressure on the membrane 22. The three second resistors R21, R22, and R23 are arranged along the second circumference 26 at a pitch of 120°. Preferably, all of the second resistors R21, R22, and R23 arranged on the second circumference 26 are arranged at substantially equal intervals. In the embodiment shown in FIG. 2, at least two second resistors R21, R22, and R23 are arranged on the second circumference 26, and two second resistors R21 and R22 may be arranged on the second circumference 26, for example, when three or more first resistors R11 and R12 are arranged on the first circumference 24. Moreover, as shown in other embodiments, the pressure sensor according to the present invention may include four or five or more second resistors R21 and R22. Note that, as with the first circumference 24, preferably, the second circumference 26 is a line connecting positions where substantially the same strains are generated at the time of applying pressure on the membrane 22. When the second resistors R21, R22, and R23 are arranged on such a second circumference 26, the linearity between the pressure and the output of the Wheatstone bridge is improved. The second circumference 26 preferably passes through a position where a negative strain having a maximum absolute value is generated at the time of applying pressure on the membrane 22, but may pass through another position where a negative strain is generated. Moreover, as shown in FIG. 2, the second resistors R21, R22, and R23 are preferably arranged so that their center positions are on the second circumference 26, but the arrangement of the second resistors R21, R22, and R23 is not limited to this, and at least a part of the second resistors R21, R22, and R23 are arranged on the second circumference 26.

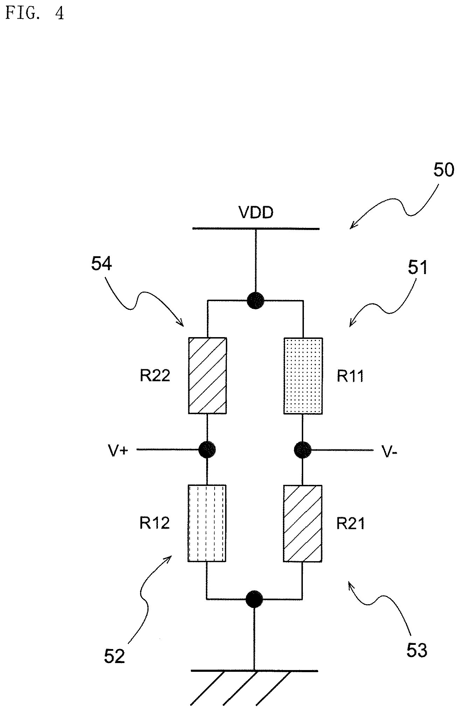

In the pressure sensor 10, at least one of the number of first resistors R11 and R12 arranged on the first circumference 24 and the number of second resistors R21, R22, and R23 arranged on the second circumference 26 is three or more. That is, in the pressure sensor 10, the number of first resistors R11 and R12 is two, and the number of second resistors R21, R22, and R23 is three. On the other hand, as shown in FIG. 4, in the pressure sensor 10, a Wheatstone bridge 50 is formed by at least two first resistors R11 and R12 and at least two second resistors R21, R22, and R23. Thus, in the pressure sensor 10, the number of second resistors R21, R22, and R23 is larger than the necessary number for forming the Wheatstone bridge 50.

As shown in FIG. 4, the Wheatstone bridge 50 includes four sides of a first side 51, a second side 52, a third side 53, and a fourth side 54 for arranging the first resistors R11 and R12 or the second resistors R21, R22, and R23. The first side 51 and the second side 52 are formed by one of the first resistors R11 and R12, and the third side 53 and the fourth side 54 are formed by one of the second resistors R21, R22, and R23.

As shown in FIG. 4, in the pressure sensor 10, the number of first resistors R11 and R12 constituting the Wheatstone bridge 50 is two, the first side 51 is formed by the first resistor R11, and the second side 52 is formed by the first resistor R12. Moreover, in the pressure sensor 10, the number of second resistors R21 and R22 constituting the Wheatstone bridge 50 is two, the third side 53 is formed by the second resistors R21, and the fourth side 54 is formed by the second resistors R22.

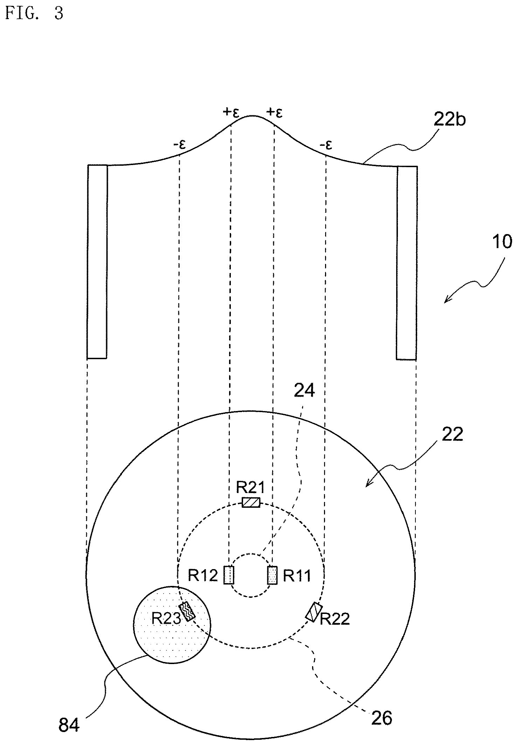

In the pressure sensor 10, as can be seen from the comparison between FIG. 2 and FIG. 4, the second resistor R23 shown in FIG. 2 does not constitute the Wheatstone bridge 50 for detecting pressure. Thus, in the pressure sensor 10, the second resistors R21, R22, and R23 are arranged on the second circumference 26 more than the number of second resistors R21, R22, and R23 required to form the Wheatstone bridge 50. Thus, for example, as shown in FIG. 3, due to the characteristics of the device to which the pressure sensor 10 is applied, if it is known beforehand in the manufacturing stage that a temperature region 84 different from other positions on the membrane 22 is generated at the position of the second resistor R23, the wiring and the like are adjusted to form the Wheatstone bridge 50 (see FIG. 4) without including the second resistor R23.

In the pressure sensor 10, as a result, the Wheatstone bridge 50 can be formed by the first resistors R11 and R12 and the second resistors R21 and R22 arranged in regions having substantially the same temperature, and it is possible to reduce or remove the influence of temperature distribution on the membrane 22 against pressure detection values. Note that, instead of the second resistor R23, the pressure sensor 10 can exclude the second resistors R21 and R22 from the resistors constituting the Wheatstone bridge 50. For example, if the temperature at the position of the second resistor R22 is different from that at other positions, the wiring or the like is adjusted to exclude the second resistor R22 from the configuration of the Wheatstone bridge 50, and the second resistor R23 can be included in the configuration of the Wheatstone bridge 50.

The stem 20 including the membrane 22 as shown in FIG. 2 and the first resistors R11 and R12 and the second resistors R21 to R23 provided on the membrane 22 are manufactured, for example, as follows. First, the stem 20 including the membrane 22 is manufactured by machining. The material of the stem 20 is not limited as long as an appropriate elastic deformation is generated, and examples thereof include metals and alloys such as stainless steel.

Next, a semiconductor thin film or a metal thin film is formed on the membrane 22 with an insulating film interposed therebetween, and these thin films are subjected to a fine processing with a semiconductor processing technique, such as laser processing and screen printing, so as to form the first resistors R11 and R12 and the second resistors R21 to R23 as shown in FIG. 2, wirings, connection electrode portions, and the like. Note that, if necessary, an insulating surface layer may be formed on the first resistors R11 and R12, the second resistors R21 to R23, and the like.

### Second Embodiment

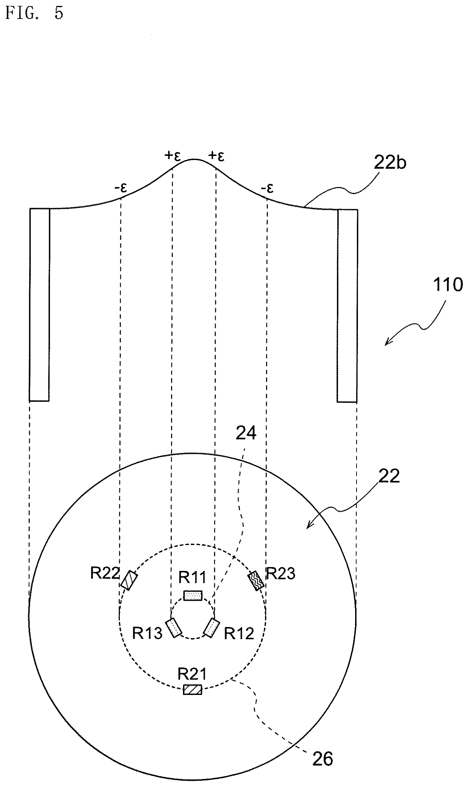

FIG. 5 is a conceptual diagram illustrating an arrangement state of resistors in the membrane 22 of a pressure sensor 110 according to Second Embodiment. The upper part of FIG. 5 is a schematic cross-sectional view of the stem 20, and the lower part of FIG. 5 is a schematic plane view of the stem 20 viewed from the upper side, which is the outer surface 22b side of the membrane 22. The pressure sensor 110 according to Second Embodiment is similar to the pressure sensor 10 according to First Embodiment, except for the number of resistors arranged on the first circumference 24 and the configuration of a Wheatstone bridge 150. The pressure sensor 110 is described focusing on the differences from the pressure sensor 10, and common matters with the pressure sensor 10 are not described.

As shown in FIG. 5, the pressure sensor 110 includes three first resistors R11, R12, and R13 arranged separately from each other on the first circumference 24. The three first resistors R11, R12, and R13 of the pressure sensor 110 are arranged along the first circumference 24 at intervals of 120°. However, the arrangement of the three first resistors R11, R12, and R13 is shifted by an angle of approximately 60° with respect to the three second resistors R21, R22, and R23. Since the arrangement of the first resistors R11, R12, and R13 and the second resistors R21, R22, and R23 are shifted, it is possible to prevent the problem of a plurality of resistors being arranged in a specific temperature region.

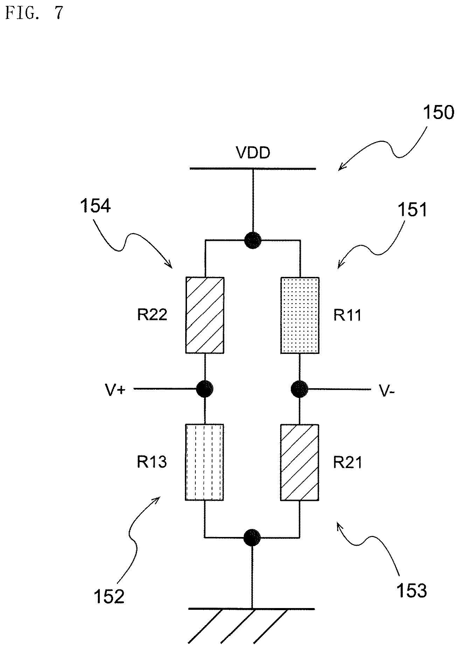

In the pressure sensor 110, as shown in FIG. 5, the number of first resistors R11, R12, and R13 and the number of second resistors R21, R22, and R23 are both three. On the other hand, as shown in FIG. 7, in the pressure sensor 110, the Wheatstone bridge 150 is formed by two first resistors R11 and R13 and two second resistors R21 and R22. Thus, in the pressure sensor 110, the number of first resistors R11, R12, and R13 and the number of second resistors R21, R22, and R23 are each larger than the number required to form the Wheatstone bridge 150.

In the pressure sensor 110, as shown in FIG. 7, the number of first resistors R11 and R12 constituting the Wheatstone bridge 150 is two, a first side 151 is formed by the first resistor R11, and a second side 152 is formed by the first resistor R13. Moreover, in the pressure sensor 110, the number of second resistors R21 and R22 constituting the Wheatstone bridge 150 is two, a third side 153 is formed by the second resistor R21, and a fourth side 154 is formed by the second resistor R22.

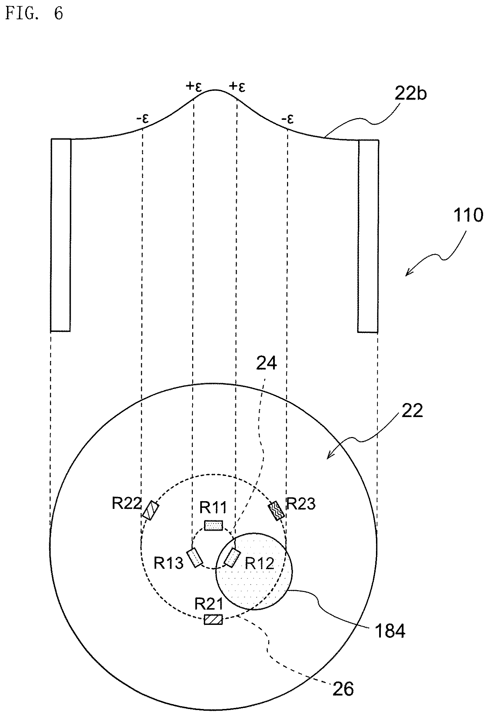

As can be seen from the comparison between FIG. 5 and FIG. 7, in the pressure sensor 110, the first resistor R12 shown in FIG. 5 does not constitute the Wheatstone bridge 150 for detecting pressure. Thus, in the pressure sensor 110, the first resistors R11, R12, and R13 are arranged on the first circumference 24 more than the number of first resistors R11, R12, and R13 required to form the Wheatstone bridge 150. Thus, for example, as shown in FIG. 6, due to the characteristics of the device to which the pressure sensor 110 is applied, if it is known beforehand in the manufacturing stage that a temperature region 184 different from other positions on the membrane 22 is generated at the position of the second resistor R23, the wiring and the like are adjusted to form the Wheatstone bridge 150 (see FIG. 7) without including the first resistor R12.

In the pressure sensor 110, as a result, the Wheatstone bridge 150 can be formed by the first resistors R11 and R13 and the second resistors R21 and R22 arranged in regions having approximately the same temperature, and it is possible to reduce or remove the influence of temperature distribution on the membrane 22 against pressure detection values. Note that, in the pressure sensor 110, the second resistors R21, R22, and R23 arranged on the second circumference 26 are all located outside the temperature region 184. Thus, the Wheatstone bridge 150 may be formed by any of the second resistors R21, R22, and R23. If the temperature region 184 is generated at a position different from that shown in FIG. 6, the first resistors R11, R12, and R13 and the second resistors R21, R22, and R23 constituting the Wheatstone bridge 150 can be changed according to the position of the temperature region 184.

In other matters, the pressure sensor 110 exhibits effects similar to those of the pressure sensor 10 according to First Embodiment.

### Third Embodiment

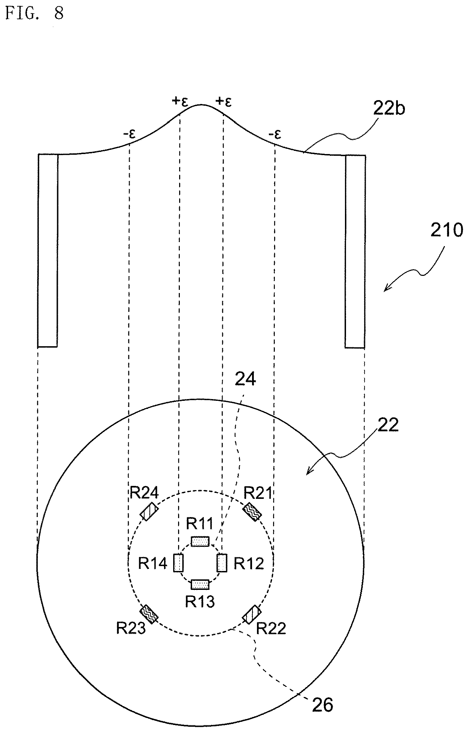

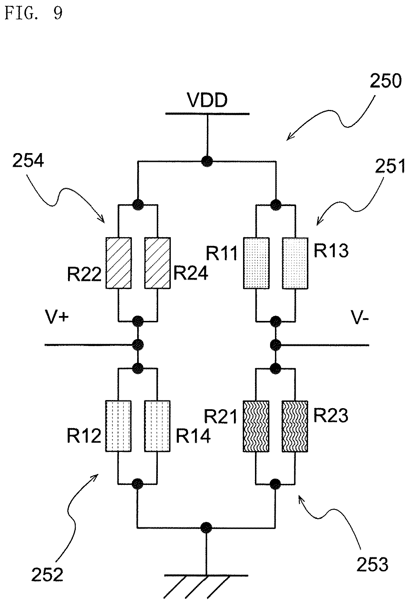

FIG. 8 is a conceptual diagram illustrating an arrangement state of resistors in the membrane 22 of a pressure sensor 210 according to Third Embodiment. The upper part of FIG. 8 is a schematic cross-sectional view of the stem 20, and the lower part of FIG. 8 is a schematic plane view of the stem 20 viewed from the upper side, which is the outer surface 22b side of the membrane 22. The pressure sensor 210 according to Third Embodiment is similar to the pressure sensor 10 according to First Embodiment, except for the number of resistors arranged on the first circumference 24 and the second circumference 26 and the configuration of a Wheatstone bridge 250 (see FIG. 9). The pressure sensor 210 is described focusing on the differences from the pressure sensor 10, and common matters with the pressure sensor 10 are not described.

As shown in the lower part of FIG. 8, four first resistors R11, R12, R13, and R14 and four second resistors R21, R22, R23, and R24 are arranged on the outer surface 22b of the membrane 22. The first resistors R11 to R14 are arranged separately from each other on a first circumference 24 where a positive strain characteristic ε+ is generated at the time of applying pressure in the membrane 22. Moreover, the second resistors R21 to R24 are arranged separately from each other on a second circumference 26 where a negative strain characteristic ε- is generated at the time of applying pressure in the membrane 22.

The four first resistors R11 to R14 are arranged along the first circumference 24 at a pitch of 90°. Moreover, the four second resistors R21 to R24 are arranged along the second circumference 26 at a pitch of 90°. The arrangement of the four first resistors R11 to R14 is shifted by an angle of approximately 45° with respect to the four second resistors R21 to R24.

FIG. 9 is a conceptual diagram illustrating the configuration of a Wheatstone bridge 250 formed by the pressure sensors 210. In the pressure sensor 210, as shown in FIG. 9, the number of first resistors R11 to R14 constituting the Wheatstone bridge 250 is three or more (four in the example shown in FIG. 9). A first side 251, which is one of four sides on which the first resistors R11 to R14 or the second resistors R21 to R24 are arranged in the Wheatstone bridge 250, is formed by two first resistors R11 and R13.

As can be seen from FIG. 8 and FIG. 9, the distance between the first resistor R11, which is one of the first resistors R11 and R13 constituting the first side 251, and the first resistor R13, which is another one of the first resistors R11 and R13 constituting the first side 251, is equal to or more than the distance between the first resistor R11 and at least one of the first resistors R12 and R14 constituting a second side 252 different from the first side 251 in the Wheatstone bridge 250. More specifically, the first resistor R11 and the first resistor R13 constituting the first side 251 are arranged at opposite positions (180° rotation positions) on the first circumference 24, and the first resistors R12 and R14 constituting the second side 252 are arranged at positions adjacent to the first resistor R11 (90° rotation positions).

When the first side 251 is formed by the two first resistors R11 and R13, a combined resistance value of the first side 251 is more likely to be close to a resistance value reflecting the standard temperature of the membrane 22 by increasing the distance between the two first resistors R11 and R13 and dispersedly arranging them on the membrane 22. Thus, such a pressure sensor 210 can effectively reduce the influence of the temperature distribution generated on the first circumference 24 against the output value of the pressure sensor 210.

The first resistor R11, which is one of the first resistors R11 and R13 constituting the first side 251, is connected in parallel to the first resistor R13, which is another one of the first resistors R11 and R13 constituting the first side 251. Since the first side 251 is formed by the two first resistors R11 and R13 connected in parallel, even if the first resistor R11 is located at a position having the temperature different from that in other regions on the membrane 22, the influence of the temperature distribution on the membrane 22 can be reduced as compared with the case where the first side 251 is formed by the first resistor R11 alone. This is because, since the first side 251 of the Wheatstone bridge 250 is formed by a combined resistance of the first resistors R11 and R13, the deviation of the output value due to the abnormal temperature of the first resistor R11 can be reduced to approximately half if the first resistor R13 is disposed in a region having a standard temperature on the membrane 22.

As shown in FIG. 9, the second side 252 of the Wheatstone bridge 250 is also formed by two first resistors R12 and R14 and has features similar to those of the first side 251.

In the pressure sensor 210, as shown in FIG. 9, similarly to the first resistors R11 to R14, the number of second resistors R21 to R24 constituting the Wheatstone bridge 250 is three or more (four in the example shown in FIG. 9). A third side 253, which is one of four sides on which the first resistors R11 to R14 or the second resistors R21 to R24 are arranged in the Wheatstone bridge 250, is formed by two second resistors R21 and R23.

As can be seen from FIG. 8 and FIG. 9, the distance between the second resistor R21, which is one of the second resistors R21 and R23 constituting the third side 253, and the second resistor R23, which is another one of the second resistors R21 and R23 constituting the third side 253, is equal to or more than the distance between the second resistor R21 and at least one of the second resistors R22 and R24 constituting the fourth side 254 different from the third side 253 in the Wheatstone bridge 250. More specifically, the second resistor R21 and the second resistor R23 constituting the third side 253 are arranged at opposite positions (180° rotation positions) on the second circumference 26, and the second resistors R22 and R24 constituting the fourth side 254 are arranged at positions adjacent to the second resistor R21 (90° rotation positions).

When the third side 253 is formed by the two second resistors R21 and R23, a combined resistance value of the third side 253 is more likely to reflect the standard temperature of the membrane 22 by increasing the distance between the two second resistors R21 and R23. Thus, such a pressure sensor 210 can effectively reduce the influence of the temperature distribution generated on the second circumference 26 against the output value of the pressure sensor 210.

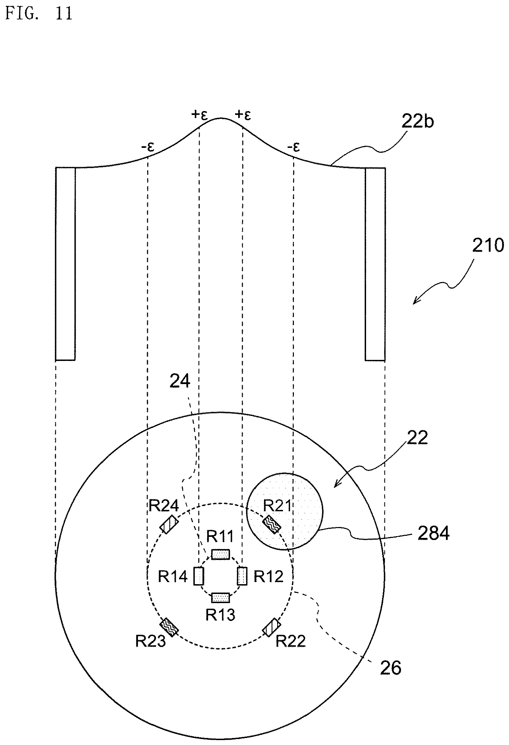

The second resistor R21, which is one of the second resistors R21 and R23 constituting the third side 253, is connected in parallel to the second resistor R23, which is another one of the second resistors R21 and R23 constituting the third side 253. Since the third side 253 is formed by the two second resistors R21 and R23 connected in parallel, even if the second resistor R21 is located in a temperature region 284 having the temperature different from that in other regions on the membrane 22 as shown in FIG. 11, the influence of the temperature distribution on the membrane 22 can be reduced as compared with the case where the third side 253 is formed by the second resistor R21 alone. This is because, since the third side 253 of the Wheatstone bridge 250 is formed by a combined resistance of the second resistors R21 and R23, the deviation of the output value due to the abnormal temperature of the second resistor R21 can be reduced to approximately half if the second resistor R23 is disposed in a region having a standard temperature on the membrane 22.

As shown in FIG. 9, the fourth side 254 of the Wheatstone bridge 250 is also formed by two second resistors R22 and R24 and has features similar to those of the third side 253.

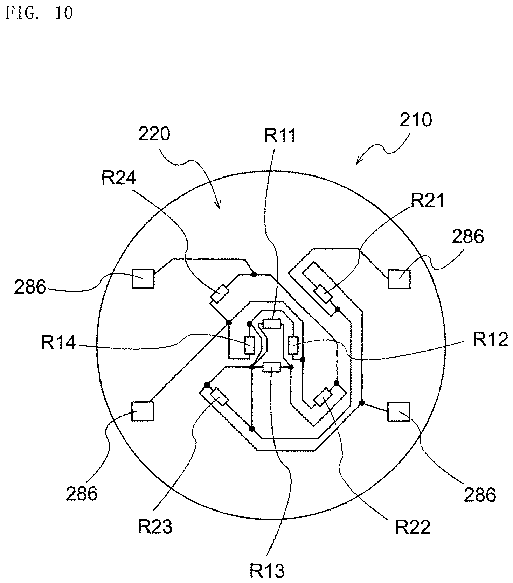

FIG. 10 is a conceptual diagram illustrating an example of the shape of wiring in the pressure sensor 210. For example, as shown in FIG. 10, the Wheatstone bridge 250 as shown in FIG. 9 can be manufactured by electrically connecting the first resistors R11 to R14 and the second resistors R21 to R24 arranged on the membrane 22. As with the first resistors R11 to R14 and the second resistors R21 to R24, a wiring portion 285 for electrically connecting the first resistors R11 to R14 and the second resistors R21 to R24 and electrode portions 286 connected to the ends of the wiring portion 285 are formed by, for example, microfabrication of a metal thin film.

In the pressure sensor 210 according to Third Embodiment, the number of first resistors R11 to R14 and second resistors R21 to R24 is three or more, each side of the Wheatstone bridge 250 is formed by a plurality of first resistors R11 to R14 or a plurality of second resistors R21 to R24, and it is thus possible to reduce the influence of the temperature distribution on the membrane 22 against the output value of the pressure sensor 210.

For the common matters with the pressure sensor 10 according to First Embodiment, the pressure sensor 210 exhibits effects similar to those of the pressure sensor 10.

### Fourth Embodiment

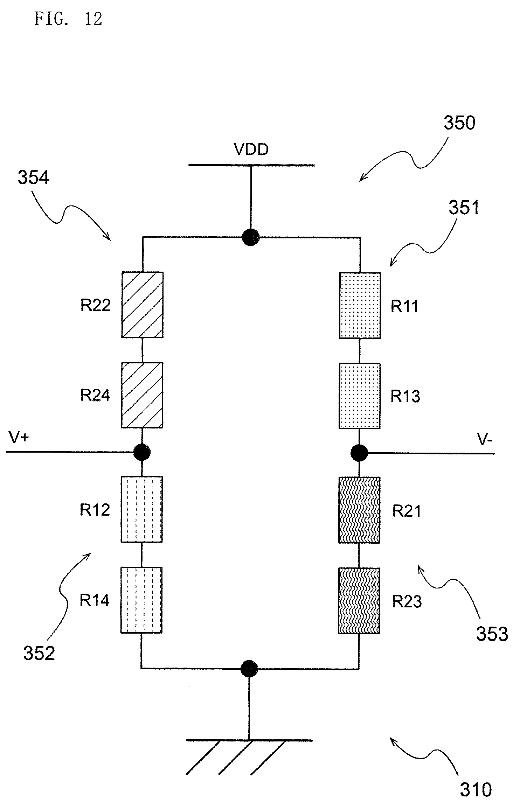

FIG. 12 is a conceptual diagram illustrating a configuration of a Wheatstone bridge 350 formed by a pressure sensor 310 according to Fourth Embodiment. The pressure sensor 310 according to Fourth Embodiment is different from the pressure sensor 210 according to Third Embodiment in that resistors constituting each side of the Wheatstone bridge 350 are connected in series, but is similar to the pressure sensor 210 according to Third Embodiment in other matters. The pressure sensor 310 is described focusing on the differences from the pressure sensor 210, and common matters with the pressure sensor 210 are not described.

Similarly to the pressure sensor 210 according to Third Embodiment, as shown in FIG. 12, the pressure sensor 310 according to Fourth Embodiment includes four first resistors R11, R12, R13, and R14 and four second resistors R21, R22, R23, and R24. The arrangement of the first resistors R11 to R14 and the second resistors R21 to R24 on the membrane 22 is similar to that of the pressure sensor 210 shown in FIG. 8.

As shown in FIG. 12, the first resistor R11, which is one of the first resistors R11 and R13 constituting a first side 351 of the Wheatstone bridge 350, is connected in series to the first resistor R13, which is another one of the first resistors R11 and R13 constituting the first side 351. Since the first side 351 is formed by the two first resistors R11 and R13 connected in series, the resistance values of the respective first resistors R11 and R13 can be reduced, and the first resistors R11 and R13 are thus advantageous for miniaturization. In the pressure sensor 310, as with the pressure sensor 210, even if the first resistor R11 is located at a position having the temperature different from that in other regions on the membrane 22, the influence of the temperature distribution on the membrane 22 against the output value of the pressure sensor 310 can be reduced as compared with the case where the first side 251 is formed by the first resistor R11 alone.

As shown in FIG. 12, a second side 352 of the Wheatstone bridge 350 is also formed by two first resistors R12 and R14 and has features similar to those of the first side 351.

As shown in FIG. 12, the second resistor R21, which is one of the second resistors R21 and R23 constituting a third side 353 of the Wheatstone bridge 350, is connected in series to the second resistor R23, which is another one of the second resistors R21 and R23 constituting the third side 353. Since the third side 353 is formed by the two second resistors R21 and R23 connected in series, the resistance values of the respective second resistors R21 and R23 can be reduced, and the second resistors R21 and R23 are thus advantageous for miniaturization. In the pressure sensor 310, as with the pressure sensor 210, even if the second resistor R21 is located at a position having the temperature different from that in other regions on the membrane 22, the influence of the temperature distribution on the membrane 22 against the output value of the pressure sensor 310 can be reduced as compared with the case where the third side 353 is formed by the second resistor R21 alone.

As shown in FIG. 12, a fourth side 354 of the Wheatstone bridge 350 is also formed by two second resistors R22 and R24 and has features similar to those of the third side 353.

In the pressure sensor 310 according to Fourth Embodiment, as with the pressure sensor 210 according to Third Embodiment, the number of first resistors R11 to R14 and second resistors R21 to R24 is three more, each side of the Wheatstone bridge 350 is formed by a plurality of first resistors R11 to R14 or a plurality of second resistors R21 to with R24, and it is thus possible to reduce the influence of the temperature distribution on the membrane 22 against the output value of the pressure sensor 310.

For the common matters with the pressure sensor 210 according to Third Embodiment, the pressure sensor 310 exhibits effects similar to those of the pressure sensor 210.

### Fifth Embodiment

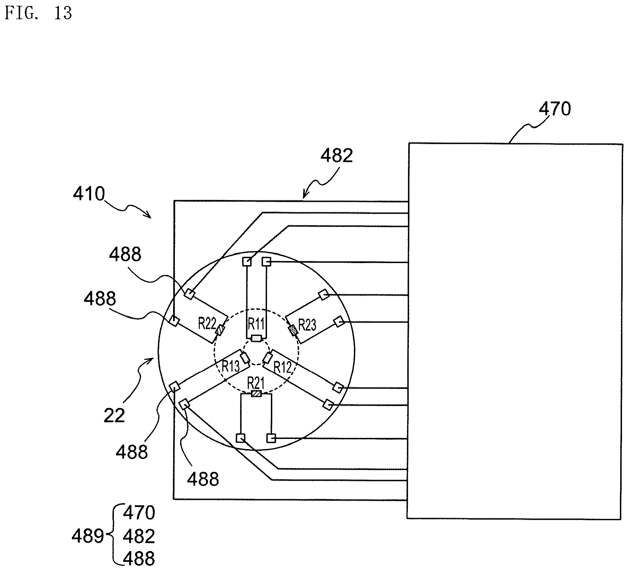

FIG. 13 is a conceptual diagram illustrating a pressure sensor 410 according to Fifth Embodiment. The pressure sensor 410 is similar to the pressure sensor 110 shown in FIG. 5, except for a connection unit 489 capable of changing connections of the first resistors R11 to R13 and the second resistors R21 to R23. The pressure sensor 410 is described focusing on the differences from the pressure sensor 110, and common matters with the pressure sensor 110 are not described.

As with the pressure sensor 110 shown in FIG. 5, the pressure sensor 410 includes three first resistors R11, R12, and R13 arranged separately from each other on the first circumference 24 and three second resistors R21, R22 and R23 arranged separately from each other on the second circumference 26.

As shown in FIG. 13, the pressure sensor 410 includes connection electrode portions 488 electrically connected to one end and the other end of each of the resistors R11 to R13 and R21 to R23. One pair of connection electrode portions 488 is provided on the membrane 22 for each of the resistors R11 to R13 and R21 to R23.

Each of the connection electrode portions 488 is connected to a substrate portion 470 via a connection wiring 482. As a result, each of the resistors R11 to R13 and R21 to R23 can be independently connected to the substrate portion 470.

The connection unit 489 of the pressure sensor 410 is formed by the connection electrode portions 488, the connection wiring 482, and the substrate portion 470. The connection unit 489 can change connection between a state in which the resistors R11 to R13 and R21 to R23 connected with the connection unit 489 via the pair of connection electrode portions 488 form a Wheatstone bridge of the pressure sensor 410 and a state in which the resistors R11 to R13 and R21 to R23 connected with the connection unit 489 via the pair of connection electrode portions 488 do not form a Wheatstone bridge. For example, the method for changing connection by the connection unit 489 as described above is a method of changing a connection state by a jumper wire or the like inside the substrate portion 470, a method of changing a connection state of the connection wiring 482, or the like, but is not limited thereto.

The pressure sensor 410 can form a Wheatstone bridge similar to the Wheatstone bridge 150 of the pressure sensor 110 shown in FIG. 7 and can further change the connection of the connection unit 489 so as to form a Wheatstone bridge different from the Wheatstone bridge 150. For example, the resistor constituting the fourth side 154 of the Wheatstone bridge 150 shown in FIG. 7 can be changed from the second resistor R22 to the second resistor R23, and the resistor constituting the first side 151 can be changed from the first resistor R11 to the first resistor R12.

In the pressure sensor 410, the first resistors R1 1 to R13 or the second resistors R21 to R23 arranged at positions where a temperature distribution is generated on the membrane 22 can be excluded from the resistors constituting a Wheatstone bridge while obtaining an actual detection value during inspection or use of the pressure sensor 410. As a result, the pressure sensor 410 can effectively reduce or remove the influence of the temperature distribution generated on the membrane 22 against the output value of the pressure sensor 410.

Note that, the pressure sensor 410 shown in FIG. 13 include a pair of connection units 489 for all of the resistors R11 to R13 and R21 to R23 arranged on the membrane 22. Unlike this, however, the pressure sensor 410 may include a pair of connection units 489 for only a part of the resistors R11 to R13 and R21 to R23. The pressure sensor 410 can change the configuration of the Wheatstone bridge as long as a pair of connection units 489 is provided for at least one of the resistors R11 to R13 and R21 to R23.

For the common matters with the pressure sensor 110 according to Second Embodiment, the pressure sensor 410 exhibits effects similar to those of the pressure sensor 110.

### Sixth Embodiment

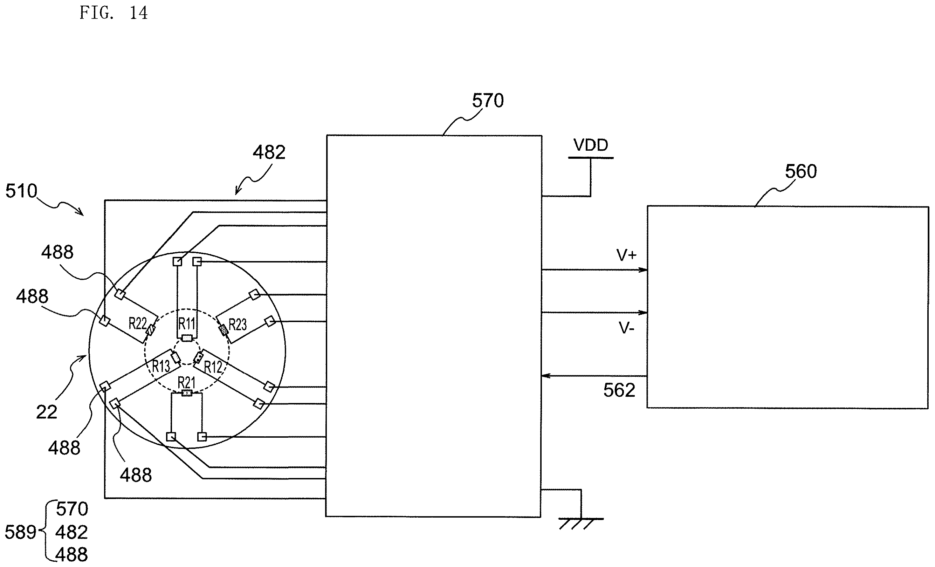

FIG. 14 is a conceptual diagram illustrating a pressure sensor 510 according to Sixth Embodiment. The pressure sensor 510 is similar to the pressure sensor 410 shown in FIG. 13, except for a substrate portion 570 and a control unit 560. The pressure sensor 510 is described focusing on the differences from the pressure sensor 410, and common matters with the pressure sensor 410 are not described.

As shown in FIG. 14, the pressure sensor 510 includes a control unit 560 for controlling a connection change of a connection unit 589. The substrate portion 570 at the connection unit 589 of the pressure sensor 510 includes a switch circuit, such as multiplexer. The substrate portion 570 receives a control signal 562 from the control unit 560 and changes the configuration of the Wheatstone bridge using the first resistors R11 to R13 and the second resistors R21 to R23 on the membrane 22.

For example, the substrate portion 570 selects any two of the three first resistors R11 to R13 provided on the membrane 22 and any two of the three second resistors R21 to R23 provided on the membrane 22 and can form a Wheatstone bridge. The control unit 560 can receive the output of the Wheatstone bridge formed by the substrate portion 570 from the substrate portion 570.

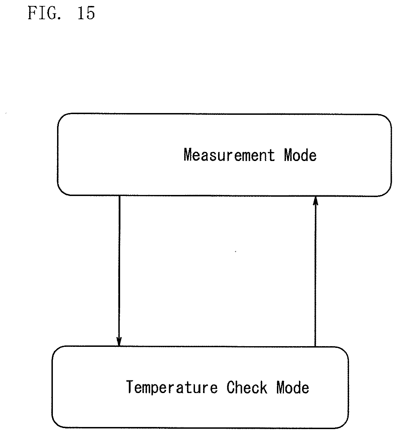

FIG. 15 is a conceptual diagram illustrating a usage mode of the pressure sensor 510 controlled by the control unit 560. As shown in FIG. 15, the control unit 560 can use the pressure sensor 510 in two modes of a measurement mode and a temperature check mode.

The control unit 560 uses the measurement mode, for example, when the pressure sensor 510 detects the pressure to be measured. In the measurement mode, the control unit 560 fixes the configuration of the Wheatstone bridge, obtains the output of the Wheatstone bridge using the predetermined first resistors R11 to R13 and second resistors R21 to R23, and detects the pressure.

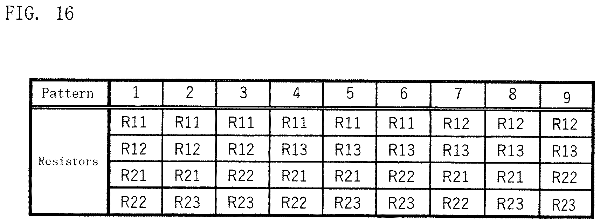

On the other hand, in the temperature check mode, the control unit 560 changes the connection of the substrate portion 570 as a part of the connection unit 589 and obtains the output value of the Wheatstone bridge according to each configuration while changing the configuration of the Wheatstone bridge. FIG. 16 illustrates the correspondence between Patterns 1 to 9 of the Wheatstone bridge configured by the control unit 560 in the temperature check mode and the first resistors R11 to R13 and the second resistors R21 to R23 used in each pattern.

The control unit 560 configures the Wheatstone bridges of Patterns 1 to 9 shown in FIG. 16 by changing the connection of the substrate portion 570 and obtains the output value of the Wheatstone bridge according to each configuration. The Wheatstone bridges of Patterns 1 to 9 checked in the temperature check mode include combinations of selecting two from each of the three first resistors R11 to R13 and the three second resistors R21 to R23. Thus, the control unit 560 can determine which resistor causes an abnormal value or which resistor does not cause an abnormal value by comparing the output values of the Wheatstone bridges in each configuration.

For example, as shown in FIG. 6, when the temperature region 184 having the temperature different from that at other positions on the membrane 22 is generated at the position of the first resistor R12, the control unit 560 can detect this by the operation in the temperature check mode. This is because when the temperature region 184 is generated at the position of the first resistor R12, among the Wheatstone bridges of Patterns 1 to 9, Patterns 1 to 3 and 7 to 9, which employ the first resistor R12, have output values different from those in Patterns 4 to 6, which do not employ the first resistor R12. When a temperature region is generated at a position of another resistor, this resistor can be detected in the same manner.

The control unit 560 can determine the configuration of the Wheatstone bridge used in the detection mode according to the operation result in the temperature check mode. For example, when the control unit 560 detects the generation of the temperature region 184 at the position of the first resistor R12, a Wheatstone bridge that does not use the first resistor R12 can be employed in the measurement mode after the temperature check mode.

The timing at which the control unit 560 operates in the temperature check mode is not limited, but the control unit 560 can perform the temperature check mode, for example, during inspection or at the beginning of detection by the pressure sensor 510, at the timing at which the membrane 22 reaches a predetermined temperature, at the timing at which the pressure detected by the pressure sensor 510 reaches a predetermined pressure, or the like.

In the pressure sensor 510, the first resistors R11 to R13 or the second resistors R21 to R23 arranged at positions where the temperature distribution is generated on the membrane 22 can be excluded from the resistors constituting the Wheatstone bridge while obtaining an actual detection value during inspection or use of the pressure sensor 510. As a result, it is possible to effectively reduce or remove the influence of the temperature distribution on the membrane 22 against the output value of the pressure sensor 510.

For the common matters with the pressure sensor 410 according to Fifth Embodiment, the pressure sensor 510 exhibits effects similar to those of the pressure sensor 410.

Hereinabove, the present invention is described with reference to the embodiments, but it goes without saying that the present invention is not limited to only the above-mentioned embodiments and includes many other embodiments and modifications. For example, the first resistors R11 to R13 and the second resistors R21 to R23 are not arranged at equal intervals on the first circumference 24 or the second circumference 26, but may be partially or wholly unevenly arranged.

### Explanation of References

10, 110, 210, 310, 410, 510... pressure sensor
12... connection member
12a... screw groove
12b... flow path
14... holding member
20... stem
22a... inner surface
22b... outer surface
22... membrane
24... first circumference
26... second circumference
R11, R12, R13, R14... first resistor
R21, R22, R23, R24... second resistor
50, 150, 250, 350... Wheatstone bridge
51, 151, 251, 351... first side
52, 152, 252, 352... second side
53, 153, 253, 353... third side
54, 154, 254, 354... fourth side
70, 470, 570... substrate portion
82, 482... connection wiring
84, 184, 284... temperature region
285... wiring portion
488... connection electrode portion
489, 589... connection unit
560... control unit
562... control signal

## Claims

1. A pressure sensor comprising:
a membrane generating a strain in response to pressure;
at least two first resistors arranged separately from each other on a first circumference where a positive strain characteristic is generated at the time of applying pressure on the membrane; and
at least two second resistors arranged separately from each other on a second circumference where a negative strain characteristic is generated at the time of applying pressure on the membrane,
wherein
the at least two first resistors and the at least two second resistors constitute a Wheatstone bridge, and
at least one of the number of first resistors arranged on the first circumference and the number of second resistors arranged on the second circumference is three or more.

2. The pressure sensor according to claim 1, wherein
the number of first resistors constituting the Wheatstone bridge is three or more, and
a first side, one of four sides on which the first resistors or the second resistors are arranged in the Wheatstone bridge, comprises two or more first resistors.

3. The pressure sensor according to claim 2, wherein a distance between one of the first resistors constituting the first side and another one of the first resistors constituting the first side is equal to or more than a distance between one of the first resistors constituting the first side and at least one of the first resistors constituting a second side different from the first side in the Wheatstone bridge.

4. The pressure sensor according to claim 2 or claim 3, wherein one of the first resistors constituting the first side is connected in series to another one of the first resistors constituting the first side.

5. The pressure sensor according to claim 2 or claim 3, wherein one of the first resistors constituting the first side is connected in parallel to another one of the first resistors constituting the first side.

6. The pressure sensor according to any of claims 1 to 5, wherein
the number of second resistors constituting the Wheatstone bridge is three or more, and
a third side, one of four sides on which the first resistors or the second resistors are arranged in the Wheatstone bridge, comprises two or more second resistors.

7. The pressure sensor according to claim 6, wherein a distance between one of the second resistors constituting the third side and another one of the second resistors constituting the third side is equal to or more than a distance between one of the second resistors constituting the third side and at least one of the second resistors constituting a fourth side different from the third side in the Wheatstone bridge.

8. The pressure sensor according to claim 6 or claim 7, wherein one of the second resistors constituting the third side is connected in series to another one of the second resistors constituting the third side.

9. The pressure sensor according to claim 6 or claim 7, wherein one of the second resistors constituting the third side is connected in parallel to another one of the second resistors constituting the third side.

10. The pressure sensor according to any of claim 1 to claim 9, further comprising at least a pair of connection units electrically connected to one end and the other end of at least one of the first resistors and the second resistors,
wherein the connection units are capable of changing connection between a state in which at least one of the first resistors and the second resistors constitute the Wheatstone bridge and a state in which at least one of the first resistors and the second resistors do not constitute the Wheatstone bridge.

11. The pressure sensor according to claim 10, comprising a control unit for controlling a connection change of the connection units.

12. The pressure sensor according to any of claims 1 to 11, wherein
all of the first resistors arranged on the first circumference are arranged at substantially equal intervals, and
all of the second resistors arranged on the second circumference are arranged at substantially equal intervals.
